# EUROPÄISCHE PATENTSCHRIFT

(11) **EP 2 628 380 B1**
(45) Veröffentlichungstag und Bekanntmachung des Hinweises auf die Patenterteilung: **23.03.2016**
(21) Anmeldenummer: 12195994.4
(22) Anmeldetag: 07.12.2012
(51) Int. Cl.: A01F 15/12

(54) **Ballenpresse**
Baling press
Presse à empaqueter

(30) Priorität: 15.02.2012 DE 102012002796
(43) Veröffentlichungstag der Anmeldung: 21.08.2013
(73) Patentinhaber: Usines Claas France S.A.S, 57140 Metz (FR)
(72) Erfinder: Hesselmann, Ulrich, 66706 Perl (DE); Scharf, Thorsten, 66693 Orscholz (DE)

(56) Entgegenhaltungen:
- FR-A1- 2 356 357
- FR-A5- 2 084 464
- US-A- 2 971 455
- US-A- 5 072 667
- US-B1- 7 877 970

## Beschreibung

Die vorliegende Erfindung betrifft eine Ballenpresse zum Verdichten von landwirtschaftlichem Erntegut zu Ballen. Ballenpressen sind im Wesentlichen in zwei Bauformen verbreitet, zum einen Rundballenpressen, in denen kontinuierlich zugeführtes Erntegut in einer Presskammer zu einem zylindrischen Ballen aufgerollt und durch den Druck von außen umlaufenden Bändern verdichtet wird, und zum anderen Quaderballenpressen mit einer Presskammer in Form eines langgestreckten Kanals, in dem ein Presskolben hin und her bewegt wird, um schubweise zugeführtes Erntegut an einen in Entstehung befindlichen quaderförmigen Ballen anzupressen. Bei beiden Typen von Ballenpressen muss der Ballen, wenn er eine gewünschte Zielgröße erreicht hat, durch Umschlingen mit Bindematerial, meist Garn, stabilisiert werden, damit er nach Ausgabe aus der Presskammer nicht wieder zerfällt.

Um einen schnellen und wirtschaftlichen Erntevorgang zu gewährleisten, sollte das gesamte für einen Ernteeinsatz benötigte Bindegarn als Vorrat der Ballenpresse mitgeführt werden. Aus WO 2007/136410 A2 ist eine Quaderballenpresse bekannt, die ihren Garnvorrat in seitlich neben dem Presskanal angeordneten Magazinen mit sich führt. Die Magazine umfassen jeweils ein in Längsrichtung der Presse ziehharmonikaförmig gefaltetes und zu einer an den Presskanal angrenzenden Seitenwand hin abschüssiges Bodenblech, auf dem die Garnrollen ruhen, wobei die Achsen der Garnrollen jeweils parallel zu den Falten des Bodenblechs, in Querrichtung des Presskanals, verlaufen. Auf diese Weisen sind die Garnrollen gegen ein Verrutschen oder Wegrollen während des Ernteeinsatzes gesichert.

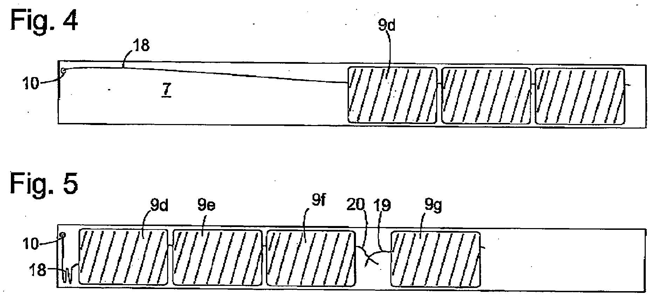

Um einen unterbrechungsfreien Betrieb zu ermöglichen, müssen die Garnrollen untereinander verbunden sein, so dass, sobald eine Rolle aufgebraucht ist, sofort der Anfang der nächsten Rolle in den Presskanal eingezogen wird. Fehler beim Verbinden der Garnrollen untereinander können dazu führen, dass das Garn hängen bleibt und ein Benutzer auf das Garnmagazin zugreifen und einen dort entstanden Knoten beseitigen muss, bevor der Ernteeinsatz weitergehen kann. WO 2007/136410 A2 zeigt in Fig. 4 einen Garnspeicher mit 15 Garnrollen in drei Magazinen. Die Garnrollen sind untereinander magazinübergreifend zu sechs Strängen à zwei oder drei Rollen verbunden. Da ein spiegelbildlicher zweiter Garnspeicher auf der anderen Seite der Ballenpresse vorhanden ist, ist davon auszugehen, dass die insgesamt zwölf Garnstränge vorgesehen sind, um paarweise zu sechs Schlaufen um jeden Ballen verknotet zu werden. Wenn das Garn in einem Ernteeinsatz nicht vollständig aufgebraucht wird, dann bleiben zwölf angebrochene Garnrollen zurück, die der Benutzer entweder umplatzieren muss, um die Vorrichtung erneut zu beladen und die Garnrollen entsprechend dem in Fig. 4 gezeigten Muster zu verknüpfen, oder er belädt die entleerten Fächer neu und verbindet die Anfänge der dort eingeladenen Garnrollen mit den Enden der angebrochenen. Daraus resultierende, einander überkreuzende Wege der Garnstränge zu den Knotern des Presskanals erhöhen jedoch erheblich das Risiko, dass sich die Garnstränge im Speicher miteinander verheddern und Störungen bei der Garnversorgung der Knoter auftreten.

Die Zahl der nach einem Ernteeinsatz übrigbleibenden angebrochenen Garnrollen könnte verringert werden, indem anstelle eines Doppelknoters, der zwei getrennt voneinander zugeführte Garnstränge zu einer Schlaufe verknüpft, ein Einfachknoter wie beispielsweise in DE 10 2007 018 560 A1 beschrieben verwendet wird, der zur Bildung einer Schlaufe einen einzigen um den Ballen herum geschlungenen Garnstrang in sich verknotet. Um einen solchen Einfachknoter zu versorgen, müssten allerdings mehr als die in der besagten Fig. 4 gezeigten zwei bzw. drei Garnrollen untereinander verbunden sein, so dass das Problem, beim Nachladen entweder die noch vorhandenen Garnrollen umzuplatzieren oder die Möglichkeit des Verhedderns in Kauf zu nehmen, bestehen bleibt.

Aus der FR 2 084 464 A5 ist eine Ballenpresse mit einem mehrere Magazine umfassenden Garnspeicher bekannt. In jedem der Magazine sind mehrere Garnrollen stehend übereinander gestapelt.

Aufgabe der Erfindung ist, eine Ballenpresse zu schaffen, die leicht und sicher nachzuladen ist, auch wenn in einem vorangegangenen Ernteeinsatz der Garnvorrat nicht vollständig aufgebraucht worden ist.

Die Aufgabe wird gelöst, indem bei einer Ballenpresse mit einem Presskanal zum Verdichten von landwirtschaftlichem Erntegut zu Ballen, wenigstens einem Knoter zum Verknoten von um einen fertigen Ballen geschlungenem Garn und einem Garnrollen für die Versorgung des Knoters aufnehmenden Garnspeicher der Garnspeicher wenigstens ein Magazin umfasst, in dem die Garnrollen mit auf einer gleichen Linie liegender Achse aufgenommen sind, wobei die Achse der Garnrollen platzsparend in Längsrichtung des Presskanals verläuft. Diese Garnrollen können bequem untereinander verbunden werden, wobei die Gefahr von Verbindungsfehlern, die zum Verheddern des Garns führen könnten, dadurch minimierbar ist, dass die Rollen untereinander entsprechend ihrer Reihenfolge im Magazin verbunden werden.

Bei einer solchen erfindungsgemäßen Ballenpresse verläuft die Achse der Garnrollen platzsparend in Längsrichtung des Presskanals.

Wenn die Garnrollen entlang der Achse verschieblich gelagert sind, kann der durch den Verbrauch einer Garnrolle freigewordene Platz wieder aufgefüllt werden, indem noch vorhandene Garnrollen nachgeschoben werden, und auf diese Weise freiwerdender Platz an einem Ende des Magazins kann mit frischen Garnrollen aufgefüllt werden. So können die Garnrollen immer der Reihe nach untereinander verbunden werden, und die Gefahr, dass sich verschiedene Garnstränge miteinander verheddern oder dass Fehler beim Verbinden der Garnrollen untereinander passieren, ist minimiert.

Um die Garnrollen sicher und leicht verschiebbar aufzunehmen, kann das Magazin zweckmäßigerweise eine Rinne aufweisen.

Als Knoter kommen Doppel- und Einfachknoter in Betracht.

Vorzugsweise ist der Knoter ein Einfachknoter, so dass ein einziger Strang von miteinander verbundenen Garnrollen zu seiner Versorgung ausreicht.

Um mehrere Knoter zu versorgen, umfasst der Garnspeicher vorzugsweise mehrere Magazine.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Draufsicht auf eine erfindungsgemäße Ballenpresse;
- Fig. 2: eine Seitenansicht der Ballenpresse;
- Fig. 3: eine Ansicht eines Garnspeichers der Ballenpresse von hinten;
- Fig. 4: ein teilweise entleertes Magazin des Garnspeichers; und
- Fig. 5: das Magazin beim Neubeladen.

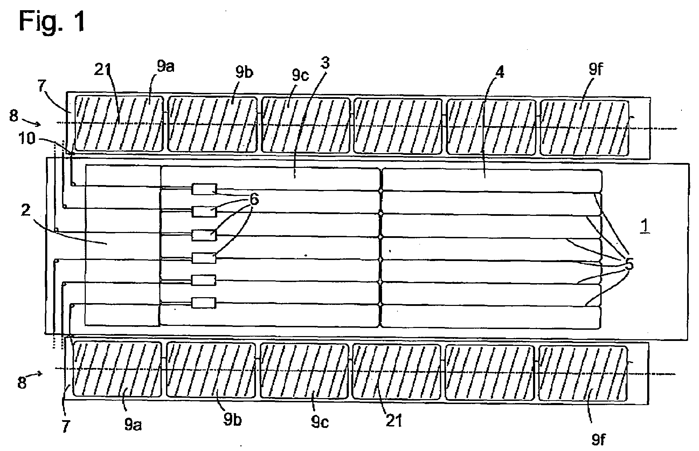

Fig. 1 zeigt die erfindungsgemäße Ballenpresse in einer stark schematisierten Draufsicht. In einem Presskanal 1 befinden sich ein in Fahrrichtung hin und her beweglicher Presskolben 2, ein in Entstehung befindlicher Ballen 3 und ein fertiger Ballen 4. Die Ballen 3, 4 sind jeweils von mehreren Bindegarnschlaufen 5, hier sechs Stück, zusammengehalten. Über dem Presskanal sind in gleicher Zahl Knoter 6 angeordnet, um, wenn der Ballen 3 eine Sollgröße erreicht hat, die herum geschlungenen Bindegarnstränge in sich zu festen Schlaufen 5 zu verknoten. Geeignete Knoter sind in der Fachliteratur vielfach beschrieben, so dass ihr Aufbau hier nicht erläutert zu werden braucht. Jedem Knoter 6 ist ein Magazin 7 in einem von zwei spiegelbildlich zueinander beiderseits des Presskolbens angeordneten Garnspeichern 8 zugeordnet, das das zum Betrieb des Knoters 6 benötigte Bindegarn enthält.

Die Magazine 7 nehmen jeweils mehrere Garnrollen 9 auf, deren Längsachsen 21 jeweils übereinstimmend parallel zur Längsrichtung des Presskanals l'ausgerichtet sind. Die Garnrollen 9 sind hohl, ohne Wickelkern, und ein vorderes Ende der zum Presskolben 2 nächstbenachbarten Garnrolle 9a ist aus dem inneren Hohlraum dieser Garnrolle 9a herausgezogen und über Ösen 10 oder gleichwertige Führungsmittel einem der Knoter 6 zugeführt. Ein hinteres Ende, das an der Außenseite dieser Garnrolle 9a zu finden ist, ist mit dem aus dem Hohlraum der in Fahrrichtung nachfolgenden Garnrolle 9b herausgezogenen vorderen Ende verknotet. So bilden die in dem Magazin 7 aufgereihten Garnrollen einen einzigen, zusammenhängenden Bindegarnstrang, der einen ununterbrochenen Betrieb der Ballenpresse ermöglicht, bis die in Fahrtrichtung hinterste Garnrolle 9f erschöpft ist.

Es versteht sich, dass die in der Figur gezeigte Zahl von sechs Garnrollen 9 pro Magazin 7 rein exemplarisch ist, und dass abweichende Zahlen sich je nach für die Magazine 7 verfügbarem Bauraum und Abmessungen der Garnrollen 9 ergeben können.

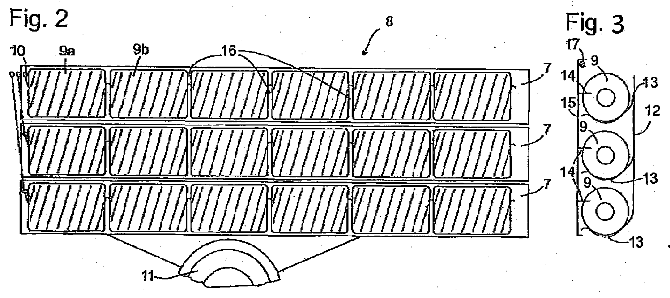

Um die insgesamt sechs Knoter 6 zu versorgen, sind sechs Magazine 7 erforderlich, von denen jeder Garnspeicher 8 drei umfasst. Die Magazine 7 eines Garnspeichers 8 sind, wie in Fig. 2 gezeigt, übereinander und über einem Rad 11 der Ballenpresse angeordnet. Die Anordnung der Garnrollen 9 ist in jedem Magazin dieselbe; die in Fahrtrichtung der Ballenpresse vorderste Garnrolle 9a, d.h. die linke in Fig. 1 und 2, ist über Ösen 10 oder dergleichen mit dem jeweils zugeordneten Knoter 6 verbunden, und ihr äußeres Ende ist verknotet mit dem inneren Ende der in Fahrtrichtung nachfolgenden Garnrolle 9b.

Fig. 3 zeigt, gesehen vom Heck der Ballenpresse aus, das linke Magazin 7. Von einer dem Presskanal zugewandten Innenwand 12 gehen drei Rinnen 13 ab, die jeweils die Garnrollen 9 eines Magazins aufnehmen. Die Rinnen 13 können in Fahrzeuglängsrichtung horizontal ausgerichtet sein, sodass Erschütterungen während des Betriebs keine gerichtete Bewegung der Rollen im Magazin 7 bewirken. Denkbar ist aber auch, die Garnrollen 9 gegen eine mögliche Verschiebung während des Betriebs zu sichern, beispielsweise durch Finger 14, die von einer Verschlussklappe 15 des Garnspeichers 8 in dessen Inneres, in Zwischenräume 16 (s. Fig. 2) zwischen den darin untergebrachten Garnrollen 9, eingreifen. Diese Finger 14 sichern die Garnrollen 9 gegen eine Bewegung entlang der Rinnen 13, solange die Verschlussklappe 15 verschlossen ist. Wenn sie jedoch zum Beladen des Garnspeichers 8 um eine in Längsrichtung der Ballenpresse verlaufende Achse 17 hochgeschwenkt ist, sind auch die Finger 14 aus den Zwischenräumen 16 herausgezogen, sodass in diesem Zustand ein Benutzer die Garnrollen 9 nach Bedarf in den Rinnen 13 verschieben kann.

Fig. 4 zeigt eine Seitenansicht eines Magazins 7 nach einem Ernteeinsatz. Von den ursprünglich geladenen Rollen 9 sind die ersten drei aufgebraucht, und die vierte, mit 9d bezeichnet, ist angebrochen. Ein Strang 18 des Garns erstreckt sich frei durch die leere vordere Hälfte des Magazins 7 zur Öse 10. Das Nachladen neuer Garnrollen in diesem freien Bereich würde offensichtlich die Garnabgabe von der Rolle 9d behindern. Ein Weiterbetrieb der Ballenpresse ohne Entladen der noch vorhandenen Garnrollen ist ohne Schwierigkeiten möglich, indem diese wie in Fig. 5 gezeigt an das vordere Ende des Magazins 7 verschoben werden. In die nun freie hintere Hälfte des Magazins wird eine neue Garnrolle 9g eingeladen, ihr vorderes Ende 19 wird aus dem inneren Hohlraum der Rolle herausgezogen und mit dem hinteren Ende 20 der hintersten bereits platzierten Rolle 9f verknüpft. Dieser Vorgang wird so oft wiederholt, bis das Magazin 7 wieder komplett gefüllt ist. Damit ist die Ballenpresse für einen neuen Ernteeinsatz bereit.

### Bezugszeichen

- 1: Presskanal
- 2: Presskolben
- 3: Ballen
- 4: Ballen
- 5: Bindegarnschlaufe
- 6: Knoter
- 7: Magazin
- 8: Garnspeicher
- 9: Garnrolle
- 10: Öse
- 11: Rad
- 12: Innenwand
- 13: Rinne
- 14: Finger
- 15: Verschlussklappe
- 16: Zwischenraum
- 17: Achse
- 18: Strang
- 19: vorderes Ende
- 20: hinteres Ende
- 21: Achse

## Patentansprüche

1. Ballenpresse mit einem Presskanal (1) zum Verdichten von landwirtschaftlichem Erntegut zu Ballen (3, 4), wenigstens einem Knoter (6) zum Verknoten von um einen fertigen Ballen (4) geschlungenem Garn und einem Garnrollen (9) für die Versorgung des Knoters (6) aufnehmenden Garnspeicher (8), wobei der Garnspeicher (8) wenigstens ein Magazin (7) umfasst, in dem die Garnrollen (9) mit auf einer gleichen Linie liegender Achse (21) aufgenommen sind, **dadurch gekennzeichnet, dass** die Achse (21) in Längsrichtung des Presskanals (1) verläuft.

2. Ballenpresse nach einem der vorhergehenden Ansprüche, **dadurch gekennzeichnet, dass** die Garnrollen (9) entlang der Achse (21) verschieblich gelagert sind.

3. Ballenpresse nach einem der vorhergehenden Ansprüche, **dadurch gekennzeichnet, dass** das Magazin eine Rinne (13) aufweist, in der die Garnrollen (9) liegen.

4. Ballenpresse nach einem der vorhergehenden Ansprüche, **dadurch gekennzeichnet, dass** der Knoter (6) ein Einfachknoter ist.

5. Ballenpresse nach einem der vorhergehenden Ansprüche, **dadurch gekennzeichnet, dass** der Garnspeicher (8) mehrere Magazine (7) umfasst, die jeweils einen Knoter (6) versorgen.

6. Ballenpresse nach Anspruch 6, **dadurch gekennzeichnet, dass** die Magazine (7) übereinander angeordnet sind.

## Claims

1. A bale press comprising a pressing passage (1) for compressing agricultural crop material into bales (3, 4), at least one knotter (6) for knotting twine wrapped around a finished bale (4) and a twine storage means (8) having twine rolls (9) for supplying the knotter (6), wherein the twine storage means (8) includes at least one magazine (7) in which the twine rolls (9) are received with axes (21) disposed on the same line, **characterised in that** the axis (21) extends in the longitudinal direction of the pressing passage (1).

2. A bale press according to claim 1 **characterised in that** the twine rolls (9) are mounted displaceably along the axis (21).

3. A bale press according to one of the preceding claims **characterised in that** the magazine has a trough (13) in which the twine rolls (9) lie.

4. A bale press according to one of the preceding claims **characterised in that** the knotter (6) is a single knotter.

5. A bale press according to one of the preceding claims **characterised in that** the yarn storage means (8) includes a plurality of magazines (7) which each supply a respective knotter (6).

6. A bale press according to claim 5 **characterised in that** the magazines (7) are arranged one above the other.

## Revendications

1. Presse à balles comprenant un canal de pressage (1) pour compacter du produit agricole de récolte sous forme de balles (3, 4), au moins un noueur (6) pour nouer de la ficelle enroulée autour d'une balle finie (4), et une réserve de ficelle (8) contenant des pelotes de ficelle (9) pour alimenter le noueur (6), la réserve de ficelle (8) comprenant au moins un magasin (7) dans lequel les pelotes de ficelle (9) sont logées en ayant leur axe (21) disposé sur une même ligne, **caractérisée en ce que** l'axe (21) s'étend dans la direction longitudinale du canal de pressage (1).

2. Presse à balles selon une des revendications précédentes, **caractérisée en ce que** les pelotes de ficelle (9) sont disposées avec une possibilité de translation le long de l'axe (21).

3. Presse à balles selon une des revendications précédentes, **caractérisée en ce que** le magasin comporte une gouttière (13) dans laquelle reposent les pelotes de ficelle (9).

4. Presse à balles selon une des revendications précédentes, **caractérisée en ce que** le noueur (6) est un noueur simple.

5. Presse à balles selon une des revendications précédentes, **caractérisée en ce que** la réserve de ficelle (8) comporte plusieurs magasins (7) qui alimentent chacun un noueur (6).

6. Presse à balles selon la revendication 6, **caractérisée en ce que** les magasins (7) sont superposés.
